# EUROPÄISCHE PATENTSCHRIFT

(11) **EP 2 177 342 B1**
(45) Veröffentlichungstag und Bekanntmachung des Hinweises auf die Patenterteilung: **04.04.2012**
(21) Anmeldenummer: 09172878.2
(22) Anmeldetag: 13.10.2009
(51) Int. Cl.: B29C 47/10, B29C 47/92, B29C 47/50

(54) **Extrusions-Fördervorrichtung**
Extrusion transport device
Dispositif de transport à extrusion

(30) Priorität: 16.10.2008 DE 102008051973
(43) Veröffentlichungstag der Anmeldung: 21.04.2010
(73) Patentinhaber: VMI - AZ Extrusion GmbH, 93486 Runding (DE)
(72) Erfinder: Uphus, Reinhard, Dr., 30419 Hannover (DE); Fischer, Florian, 85560 Ebersberg (DE)
(74) Vertreter: Baronetzky, Klaus

(56) Entgegenhaltungen:
- DE-A1-102007 038 671
- DE-A1-102007 045 533
- DE-B1- 2 029 337
- US-A- 5 062 713
- GOUR S CHOUDHURY ET AL: "On-line Measurement of Residence Time Distribution in a Food Extruder" JOURNAL OF FOOD SCIENCE, WILEY-BLACKWELL PUBLISHING, INC, US, Bd. 63, Nr. 3, 1. Januar 1998 (1998-01-01), Seiten 529-534, XP002481231 ISSN: 0022-1147
- GOLBA J: "A NEW METHOD FOR THE ON-LINE DETERMINATION OF RESIDENCE TIME DISTRIBUTIONS IN EXTRUDERS" SOCIETY OF PLASTICS ENGINEERS. ANNUAL TECHNICAL CONFERENCE (ANTEC). PROCEEDINGS, SOCIETY OF PLASTICS ENGINEERS, US, 1. Januar 1980 (1980-01-01), Seiten 83-87, XP008091818 ISSN: 1539-2252

## Beschreibung

Die Erfindung betrifft eine Extrusions-Fördervorrichtung, gemäß dem Oberbegriff von Anspruch 1.

Extrusions-Fördervorrichtungen sind in verschiedenen Ausgestaltungen bekannt geworden. So ist es aus der EP 599 104 A2 bekannt geworden, zwei Komponenten zuzuführen, die miteinander reagieren. Es ist ein Steuermittel vorgesehen, mit dem der Druck in Abhängigkeit von der Viskosität der Mischung eingestellt werden soll.

Diese Überprüfung erfordert ein spezielles Viskosimeter, das mit der Mischung beaufschlagt werden muss. Derartige Viskosimeter sind zwar an sich bekannt, erfordern jedoch beispielsweise beim Wechsel der Mischung spezielle Vorkehrungen, um zu verhindern, dass Reste der zuvor verwendeten Mischung die neue Mischung verunreinigen. Es kann nur die mittlere Mischgüte, welche sich im gesamten Volumen des Viskosimeters befindet, ermittelt werden. Die Feinverteilung und lokale Unterschiede der Verteilung im Volumen können nicht detektiert werden.

Die Überwachung der Viskosität bei Kunststoffen ist auch beispielsweise bereits aus der DE 36 42 757 A1 bekannt, wobei dort eine Schnellspinnanlage eingesetzt werden soll und auch die Temperatur in den Regelkreis einbezogen werden soll.

Bei dieser Lösung wird kurzerhand die Druckdifferenz einer Messstrecke gemessen, um die Viskosität festzustellen. Auch dies stellt insofern ein Grob-Viskosimeter dar.

Ferner ist es auch bereits vorgeschlagen worden, die Produktqualität von Kunststoffen über verschiedene andere Sensoren zu bestimmen. Ein Beispiel hierfür ist die Verwendung von Ultraschallsensoren, die störungsfrei während der Herstellung eine Qualitätsprüfung vornehmen sollen. Diese Art der Prüfung ermöglicht zwar bei speziellen Kunststoffmaterialien tatsächlich eine Überwachung der Produktqualität. Sie ist jedoch weniger geeignet, wenn es gilt, die Mischungsgüte unterschiedlicher Mischungen zu steuern und insofern die Produktqualität zu beeinflussen.

Aus der Veröffentlichung "On-line Measurement of Residence Time Distribution in a Food Extruder", JOURNAL OF FOOD SCIENCE, WILEY-BLACKWELL PUBLISHING, ING, US, Bd. 63, Nr. 3,1. Januar 1998, Seiten 529-534, XP002481231, ISSN: 0022-1147 ist eine Extrusions-Fördervorrichtung bekannt, bei der die Auswirkungen von Drehzahl und anderen Maschinenparametern auf das Verweilzeitverhalten einer Markersubstanz dargestellt sind.

Ferner ist es gemäß der Patentanmeldung DE 10 2007 045 533.1 vorgeschlagen worden, eine Extrusions-Fördervorrichtung zu schaffen, bei der mehrere volumetrische Tochterförderer eingesetzt werden und die Drehzahl des Extruders unabhängig von der Förderrate und dem Volumenstrom des volumetrisch arbeitenden Ausgangsförderers einstellbar ist. Hiermit geling es, auch in Verbindung mit fakultativ vorgesehenen Drucksensoren, die Zufuhr von unterschiedlichen Komponenten einer Kautschukmischung zu optimieren, und auf diese Weise die Produktqualität beizubehalten.

Andererseits wäre es wünschenswert, die Mischungsgüte der zugeführten Komponenten noch genauer zu erfassen und besser zu steuern.

Daher liegt der Erfindung die Aufgabe zugrunde, eine Extrusion-Fördervorrichtung gemäß dem Oberbegriff von Anspruch 1 zu schaffen, die hinsichtlich der Steuerbarkeit und der so erzielten Produktqualität noch weiter verbessert ist und insbesondere für die Herstellung von Kautschukmischungen geeignet ist.

Diese Aufgabe wird erfindungsgemäß durch Anspruch 1 gelöst. Vorteile der Weiterbildungen ergeben sich aus den Unteransprüchen.

Erfindungsgemäß ist es besonders günstig, dass durch die Bereitstellung einer Markersubstanz bei einer Komponente der erfindungsgemäßen Extrusions-Fördervorrichtung mit der erfindungsgemäßen Erfassungsvorrichtung exakt die Verteilung der Komponente an der Mischung ermittelbar ist.

Hier läßt sich letztlich besondersgünstig die Tatsache auszunutzen, dass mit dem Extruder, der beispielsweise auch einen Transfermixbereich oder einen Stiftextruderbereich zur Verbesserung der Durchmischung aufweisen kann, die Durchmischung sehr gleichmäßig mit einer lokalen Schwankung von weniger als 5 %, insbesondere weniger als 3 % erfolgen kann. Damit lässt sich durch einen einfachen Vergleich zwischen dem Anteil der Markersubstanz an der Komponente und dem Anteil der Markersubstanz an der Mischung der Anteil der Komponente an der Mischung bestimmen. -

Die Erfassungsvorrichtung kann hierzu bei der Realisierung der Markersubstanz in Partikelform deren Verteilung erfassen, wobei es besonders günstig ist, wenn eine im weitesten Sinne optische oder elektromagnetische Erfassung realisiert ist und die Markersubstanz entsprechend emittiert.

Beispielsweise ist es möglich, floureszierende oder luminiszierende Partikel in die Komponente einzubringen. Die Mischung wird dann über ein bereitgestelltes Fenster überprüft, und der Sensor der Erfassungsvorrichtung ist auf die Oberfläche der Mischung gerichtet.

Bevorzugt fällt insofern das Emissionsspektrum der Markersubstanz mit dem Empfindlichkeitsmaximum des Sensors zusammen.

Es ist aber auch beispielsweise möglich, reflektierende Markersubstanzen zu verwenden und die Mischung über das Fenster mit elektromagnetischer Strahlung wie Licht zu beaufschlagen und den Reflektionsgrad zu messen, um die Verteilung der Komponente an der Mischung festzustellen.

Ferner besteht die Möglichkeit, die Markersubstanz als durch radioaktive oder magnetische Partikel zu realisieren, wobei diese Möglichkeit im Grunde lediglich dann realisierbar ist, wenn die betreffenden Partikel am fertigen Produkt nicht störend sind, mindestens in der bereitgestellten Konzentration.

Es wird als besonders günstig angesehen, wenn das erfasste Mischungsergebnis für die Regelung der erfindungsgemäßen Fördervorrichtung verwendet wird. Hierzu lässt sich beispielsweise die Drehzahl des Extruders und/oder die Drehzahl des ausgangsseitigen Förderers regeln, oder aber die Drehzahl des Tochterförderers.

Ferner ist es auch möglich, die Markersubstanz der Komponente der Mischung beizugeben, die im Extruder zugeführt wird, wobei diese Ausführungsform insbesondere dann sinnvoll ist, wenn ein relativ hoher Anteil der Mischung über mindestens einen Tochterförderer zugeführt wird.

In einer Ausgestaltung der Erfindung ist es vorgesehen, ohnehin erforderliche Partikel, wie beispielsweise Rußpartikel, die für die Herstellung der Abriebfestigkeit eines Profils oder bei der Reifenherstellung erwirkt sind, oder beispielsweise Farbpartikel, die der Farbgebung der Mischung dienen und in Form einer Dispersion oder als Pulver zugeführt werden können, mindestens teilweise für die Bereitstellung der Markersubstanz zu verwenden.

Bevorzugt wird erfindungsgemäß allerdings ein Teil des Vernetzungssystems oder das ganze Vernetzungssystem mit der Markersubstanz versehen und über einen Tochterförderer zugeführt, der bevorzugt einen Tochterextruder und eine Tochter-Zahnradpumpe aufweist und insofern genau dosierbar ist.

In weiterer vorteilhafter Ausgestaltung der Erfindung ist es vorgesehen, die insofern realisierte Färbung der Mischung durch die zugeführte Markersubstanz auszuwerten und für die Regelung des Mischungsverhältnisses zu verwenden.

In weiterer vorteilhafter Ausgestaltung der Erfindung ist der Sensor der Erfassungsvorrichtung ein spektraler Sensor, also ein Sensor, der nicht nur die Emissionen der Markersubstanz an einem speziellen Emissionsmaximum ermitteln kann, sondern der das gesamte relevante Emissionsspektrum der Mischung erfasst, die hierzu bevorzugt mit elektromagnetischer Strahlung wie Licht im UV-Bereich, im sichtbaren Bereich oder in IR-Berich, beaufschlagt wird.

Die Erfassung des Emissionsspektrums der Mischung erlaubt genauere Rückschlüsse auf die Mischung, und eröffnet insbesondere auch die Möglichkeit, mit einem Sensor eine Mehrzahl von Markersubstanzen zu erfassen, die beispielsweise über verschiedene Tochterförderer zugeführt worden sind und unterschiedliche Emissionsmaxima aufweisen sollten.

In modifizierter erfindungsgemäßer Ausgestaltung ist es vorgesehen, einen Mehrschneckenextruder, beispielsweise einen Doppelschneckenextruder, zu realisieren, der mehrere Tochterförderer aufweist.

Weitere Vorteile, Einzelheiten und Merkmale ergeben sich aus der nachfolgenden Beschreibung eines Ausführungsbeispiels anhand der Zeichnung.

Die einzige Figur der Zeichnung zeigt eine schematische Ansicht einer Ausführungsform einer erfindungsgemäßen Extrusions-Fördervorrichtung, bei der eine Ausführungsform der erfindungsgemäßen Extrusions-Fördervorrichtung mit einem Einzelextruder, jedoch mehreren Tochterförderern, dargestellt ist.

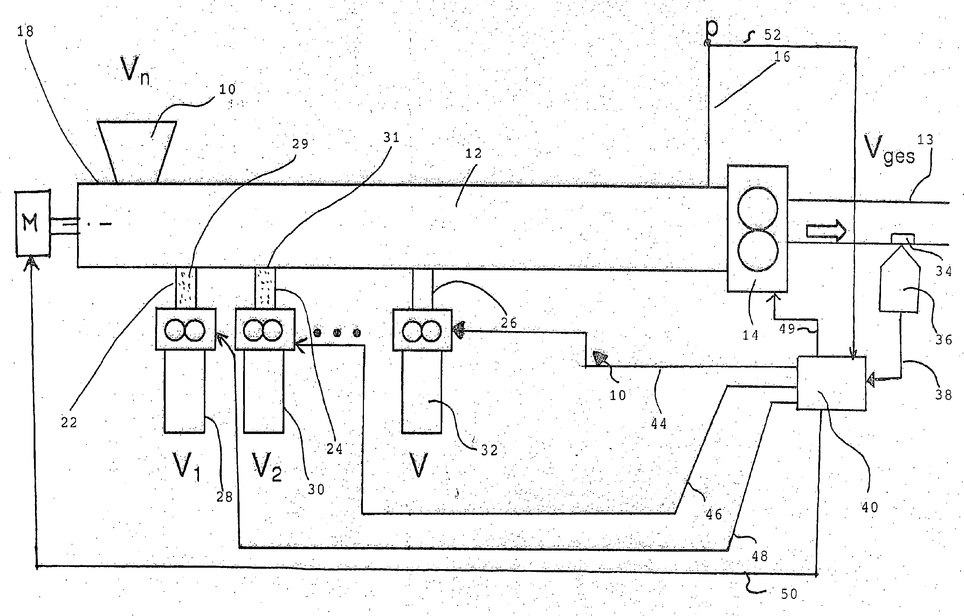

Die in Fig. 1 dargestellte Ausführungsform einer Extrusions-Fördervorrichtung 10 weist einen Extruder 12 auf, der das zentrale Element der Extrusions-Fördervorrichtung bildet. Der Extruder ist für die Extrusion und Förderung von extrudierbaren Mischungen bestimmt, zu denen Kautschukmischungen und beispielsweise TPE gehören. Er gibt ausgangsseitig einen Volumenstrom ab, der hier als V bezeichnet ist und in einer Leitung 13 geführt ist.

Alternativ ist es vorgesehen, stromab des Ausgangsförderers 14 kurzerhand das Extrudat zu beobachten, indem ein Sensor der Erfassungsvorrichtung 34 dorthin gerichtet ist. Hiermit lässt sich die Verteilung der Markersubstanz beobachten, und zwar in zwei Dimensionen, und im Falle einer Ungleichheit der Verteilung, beispielsweise einer Agglomeration, die Intensität der Vermischung erhöhen, beispielsweise, indem die Drehzahl des Extruders erhöht wird.

Es ist auch möglich, ein erfindungsgemäß extrudiertes Profil oder ein sonstiges erfindungsgemäß behandeltes Produkt kurzerhand über ein Messer oder eine Klinge aufzuschneiden. Dann liegen an der Stelle kurz stromab der betreffenden Klinge frisch geschnittene Oberflächen vor, die ebenfalls über einen erfindungsgemäßen Sensor beobachtet werden können.

Es versteht sich, dass diese Ausgestaltung dann möglich ist, wenn das erfindungsgemäß erstellte Produkt kein Fertigprodukt ist, sondern als Zwischenprodukt weiterverarbeitet wird.

Zur Volumensteuerung der Abgabe der Mischung ist ausgangsseitig des Extruders 12 ein volumetrischer Förderer 14 oder Ausgangsförderer vorgesehen, der als Zahnradpumpe ausgebildet ist. Der Antrieb der Zahnradpumpe 14 ist unabhängig von dem Antrieb des Extruders 12.

In dem dargestllten Ausführungsbeispiel ist kurz vor dem Ende des Extruders 12 ein Drucksensor 16 vorgesehen, der den dort vorhandenen Druck misst und die Antriebsgeschwindigkeit des Extruders entsprechend anpasst.

Seitlich des Extruders sind verschiedene Zuführstellen vorgesehen, wobei an der ersten Zuführstelle 22 ein Tochterförderer 28 angebracht ist. Der Tochterförderer 28 führt eine Komponente der Mischung zu, während die Hauptkomponente bei einem Einlauftrichter 10 dem Extruder 12 zugeführt wird.

In dem dargestellten Ausführungsbeispiel weist die Komponente, die durch den Tochterförderer 28 zugeführt wird, eine Markersubstanz 29 auf.

In entsprechender Weise ist eine weitere Zuführstelle 24 vorgesehen, etwas stromab der ersten Zuführstelle, jedoch innerhalb des ersten Drittels des Extruders. Die Zuführstelle 24 ist mit einem weiteren Tochterförderer 30 verbunden, und führt eine Komponente mit einer Markersubstanz 31 dem Extruder zu.

Es versteht sich, dass eine beliebige Anzahl von weiteren Tochterförderern vorgesehen sein kann, wobei in dem dargestellten Ausführungsbeispiel eine weitere Zuführstelle 26 mit einem Tochterförderer 32 dargestellt ist.

Auf diese Weise wird der Komponente Vₙ, die über den Einlauftrichter 20 zugeführt wird, im Laufe der Förderung durch den Extruder zunächst die Komponente mit der Markersubstanz 29, dann diejenige mit der Markersubstanz 31 und beliebige weitere Komponenten zugeführt, beispielsweise auch die aus der Zuführstelle 26, wobei diese Komponenten hier mit V₁, V₂ sowie V bezeichnet sind.

Der Gesamtstrom ergibt sich aus der Summe der genannten Komponentenströme und ist als V_{ges} bezeichnet.

Erfindungsgemäß wird stromab des Ausgangsförderers 14 die Verteilung der Markersubstanz oder der Markersubstanzen im Gesamt-Volumenstrom der Mischung überprüft. Hierzu ist in der Leitung 13 ein Fenster 34 ausgebildet, das beispielsweise mit druckfestem Glas versehen sein kann, das hier nicht dargestellt ist und insbesondere reflexionsarm ausgestaltet ist.

Anstelle der hier dargestellten Ausgestaltung mit einem Fenster ist es auch möglich, den Sensor über eine Bohrung in die druckfeste Leitung 12 unmittelbar einzubringen und dort über Kontakt mit der Oberfläche des Stroms der Mischung V_{ges} die Erfassung vornehmen zu lassen. Der Sensor kann auch berührungslos die freie Oberfläche der Mischung nach der festen Leitung 13 analysieren.

Der Sensor 36 ist auf die Mischung V_{ges} gerichtet und erfasst die Güte der Verteilung der Markersubstanzen 29 und 31 im Gesamtvolumenstrom der Mischung. In Abhängigkeit hiervon gibt der Sensor 36 sein Ausgangssignal ab, das über eine elektrische Anschlussleitung 38 einer erfindungsgemäßen Steuervorrichtung 40 zugeleitet wird. Das Ausgangssignal des Sensors 36 kann ein Analogsingal sein, das lediglich beispielsweise die Helligkeit der floureszierenden Markersubstanzen wiedergibt, oder ein digitales Signal, das beispielsweise das ganze spektrale Erfassungsspektrum des Sensors 36 wiedergibt.

Es ist möglich, die Anzahl der erfassten Partikel zu messen, und zwar zweidimensional, also quer zur Extrusionsrichtung und in Extrusionsrichtung. Auch kann der Partikelabstand erfasst werden und mit einer erwünschten Verteilung verglichen werden, um festzustellen, ob die Erhöhung der Drehzahl des Extruders erforderlich ist, um die Durchmischung zu verbessern.

Basierend auf der Steuervorrichung so zugeleiteten Ausgangssignal des Sensor 36 ermittelt diese das Mischungsverhältnis zwischen Vₙ und beispielsweise V₁, oder wahlweise einem oder mehreren der weiteren Volumenströme der Tochterförderer, wobei es sich versteht, dass vorab eine Kalibrierung des Sensors 36 vorgenommen worden ist, um eine Zuordnung zwischen dem Ausgangssignal auf der Leitung 38 und dem Anteil der Markersubstanz 29 bzw. 31 an dem Volumenstrom zu eichen.

Die Steuervorrichtung 40 regelt nun basierend auf der vom Benutzer vorgegebenen und gewünschten Mischungsqualität und/oder Verteilungsgüte die Drehzahl des Extruders 12. Das Mischungsverhältnis zwischen den Komponenten gemäß Vₙ, V₁, V₂ und V ändert sich hierdurch nicht, aber durch die Drehzahlerhöhung über die Steuerleitung 50 und den Motor M des Extruders wird die Durchmischung verbessert.

Bei Bedarf kann hier auch eine Temperaturmessung hinzugefügt werden, um eine Überhitzung der Kautschukmischung zu vermeiden.

Es versteht sich, dass bei Bedarf auch die Tochterförderer 28, 30 und 32 wie auch der Extruder 14 über entsprechende Anschlussleitungen 44, 46, 48 und 49 gesteuert werden können, wobei erfindungsgemäß das Mischungsverhältnis konstant bleiben soll.

Auch der Ausgangsdruck des Drucksensors 16 wird erfindungsgemäß über eine Leitung 52 der Steuervorrichtung 40 zugeleitet.

Es versteht sich, dass bei Bedarf auch für die Zufuhr der Basiskomponente Vₙ ein volumetrischer Förderer vorgesehen sein kann; typischerweise ist dies jedoch nicht erforderlich, da die Zufuhr im Grunde durch das relative Drehzahlverhältnis der volumetrischen Förderer 14 einerseits und 28, 30 und 32 andererseits automatisch ergibt.

## Patentansprüche

1. Extrusions-Fördervorrichtung, mit einem Extruder für die Mischung von Komponenten, insbesondere einer Kautschukmischung oder TPE, und mit einem volumetrisch arbeitenden Förderer, insbesondere einer Zahnradpumpe, ausgangsseitig des Extruders,
wobei mindestens eine Komponente dem Extruder durch einen volumetrischen Tochterförderer zuführbar ist,
**dadurch gekennzeichnet, dass** die mindestens eine Komponente eine Markersubstanz (29) aufweist und ausgangsseitig des Extruders (12) und/oder des ausgangsseitigen Förderers (14) eine Erfassungsvorrichtung für die Markersubstanz (29) angebracht ist, die an eine Steuervorrichtung (40) angeschlossen ist, wobei die Drehzahl des Extruders (12) und/oder des ausgangsseitigen Förderers (14), ansprechend auf die erfasste Verteilungsgüte der Markersubstanz, mittels der Steuervorrichtung (40) steuerbar ist.

2. Extrusions-Fördervorrichtung nach Anspruch 1,
**dadurch gekennzeichnet, dass** mindestens eine weitere Komponente, die dem Extruder (12) zuführbar ist, die Markersubstanz (29) aufweist, und dass die Drehzahl des Extruders (12) und/oder des ausgangsseitigen Förderers im Verhältnis zur Drehzahl des volumetrischen Tochterförderers ansprechend auf die erfasste Verteilungsgüte der Markersubstanz steuerbar ist.

3. Extrusions-Fördervorrichtung nach einem der vorhergehenden Ansprüche, **dadurch gekennzeichnet, dass** die Fördervorrichtung, insbesondere eingangsseitig des volumetrisch arbeitenden Ausgangsförderers (14), einen Drucksensor aufweist, mit welchem der Ausgangsdruck der Mischung stromab des Extruders (12) messbar ist und dass die Drehzahl mindestens des Extruders (12) und/oder des Ausgangsförderers von dem Ausgangssignal des Drucksensors geregelt ist.

4. Extrusions-Fördervorrichtung nach einem der vorhergehenden Ansprüche, **dadurch gekennzeichnet, dass** die Erfassungsvorrichtung an einem Fenster angebracht ist, das ausgangsseitig des volumetrischen Ausgangsförderers vorgesehen ist und den Anteil und/oder die Verteilung der Markersubstanz (29) an der dort vorbeiströmenden Mischung erfasst.

5. Extrusions-Fördervorrichtung nach einem der vorhergehenden Ansprüche, **dadurch gekennzeichnet, dass** die Markersubstanz (29) durch Partikel gebildet ist, die in der Markersubstanz-Komponente gleichmäßig verteilt sind und durch Mischen in dem Extruder (12) in der Mischung ebenfalls gleichmäßig verteilt sind.

6. Extrusions-Fördervorrichtung nach einem der vorhergehenden Ansprüche, **dadurch gekennzeichnet, dass** die Markersubstanz (29) durch einen optischen Sensor der Erfassungsvorrichtung erfassbar ist, und dass der Sensor (36) auf eine Oberfläche der vorbeiströmenden Mischung gerichtet ist, die die Markersubstanz (29) führt und dass insbesondere die Erfassungsvorrichtung einen Sensor aufweist, der unmittelbar auf die freiliegende Oberlfäche des Extrudats gerichtet ist.

7. Extrusions-Fördervorrichtung nach einem der vorhergehenden Ansprüche, **dadurch gekennzeichnet, dass** die spektrale Empfindlichkeit eines Sensors (36) der Erfassungsvorrichtung auf das Emissionsmaximum der Markersubstanz (29) ausgerichtet ist.

8. Extrusions-Fördervorrichtung nach einem der vorhergehenden Ansprüche, **dadurch gekennzeichnet, dass** die Markersubstanz (29) durch magnetische oder radioaktive Partikel und/oder durch fluoreszierende oder lumineszierende Beimischungen gebildet ist.

9. Extrusions-Fördervorrichtung nach einem der vorhergehenden Ansprüche, **dadurch gekennzeichnet, dass** mehr als ein Tochterförderer, also insgesamt 2 oder mehr Tochterförderer an den Extruder (12) angeschlossen sind und jeder Tochterförderer eine Komponente mit einer Markersubstanz (29, 31) fördert, und dass die Markersubstanzen voneinander unterscheidbar sind.

10. Extrusions-Fördervorrichtung nach einem der vorhergehenden Ansprüche, **dadurch gekennzeichnet, dass** die Steuervorrichtung (40) die Drehzahl und/oder den Einlaufdruck des Extruders (12) in den volumetrischen Förderer (14) steuert und ein gewünschtes Mischungsverhältnis der Mischung basierend auf dem Ausgangssignal der Erfassungsvorrichtung regelt, wobei insbesondere die Drehzahl des oder der Tochterförderer konstant gehalten ist.

11. Extrusions-Fördervorrichtung nach einem der vorhergehenden Ansprüche, **dadurch gekennzeichnet, dass** die Steuervorrichtung (40) auch die Drehzahl des Extruders (12) und/oder des ausgangsseitigen Förderers (14) regelt und insbesondere eine der Komponenten, insbesondere die die Markersubstanz (29) aufweisende Komponente, geregelt zugeführt wird.

12. Extrusions-Fördervorrichtung nach einem der vorhergehenden Ansprüche, **dadurch gekennzeichnet, dass** mindestens ein Tochterförderer die betreffende Komponente dem Extruder (12) seitlich zuführt, und zwar bevorzugt in der stromauf liegenden Hälfte des Extruders, besonders bevorzugt im ersten Drittel und insbesondere innerhalb des ersten Fünftels der Länge des Extruders.

13. Extrusions-Fördervorrichtung nach einem der vorhergehenden Ansprüche, **dadurch gekennzeichnet, dass** der Extruder (12) als Doppelschneckenextruder ausgebildet ist, insbesondere zur Verwendung für die Extrusion von Kautschukmischungen oder TPE.

14. Extrusions-Fördervorrichtung nach einem der vorhergehenden Ansprüche, **dadurch gekennzeichnet, dass** die Erfassungsvorrichtung eine Schneidvorrichtung, wie eine Klinge, aufweist, die das Extrudat teilt, und dass die Erfassungsvorrichtung einen Sensor aufweist, der stromab der Schneidvorrichtung unmittelbar auf die frisch geschnittene Oberfläche gerichtet ist.

15. Extrusions-Fördervorrichtung nach einem der vorhergehenden Ansprüche, **dadurch gekennzeichnet, dass** die Drehzahl des ausgangsseitigen Förderers (14) und der Tochterförderer (28) ansprechend auf die erfasste Verteilungsgüte der Markersubstanz einstellbar ist, wobei das Drehzahlverhältnis zwischen Tochterförderer (28) und ausgangsseitigem Förderer (14) im Wesentlichen konstant ist.

## Claims

1. An extrusion conveying device comprising an extruder for the mixing of components, in particular a rubber mixture or TPE, and comprising a volumetrically operating conveyor, in particular a gear pump, disposed at the output side of the extruder, whereas at least one component can be supplied to the extruder via a volumetric subsidiary conveyor, **characterized in that** the at least one component is provided with a marker substance (29) and that to the output side of the extruder (12) and/or of the downstream conveyor (14) a detection device for the marker substance (29) is attached which is connected to a control device (40), wherein the speed of the extruder (12) and/or the downstream conveyor (14), responsive to the detected distribution quality of the marker substance, is controllable by the control device (40).

2. An extrusion conveying device according to claim 1, **characterized in that** at least one further component which can be fed to the extruder (12) is provided with a marker substance (29), and that the speed of the extruder (12) and/or of the downstream conveyor is controllable in relation to the speed of the volumetric subsidiary conveyor, responsive to the detected distribution quality of the marker substance.

3. An extrusion conveying device according to any of the foregoing claims, **characterized in that** the conveying device, in particular at the input side of the volumetrically operating output conveyor (14), is provided with a pressure sensor with the help of which the output pressure of the mixture can be measured downstream of the extruder (12) and that the speed of at least the extruder (12) and/or the output conveyor is controlled by the output signal of the pressure sensor.

4. An extrusion conveying device according to any of the foregoing claims, **characterized in that** the detection device is attached to a window which is provided at the output side of the volumetric output conveyor and which detects the share and/or the distribution of the marker substance (29) at the mixture which flows by.

5. An extrusion conveying device according to any of the foregoing claims, **characterized in that** the marker substance (29) is formed by particles which are evenly distributed among the marker substance component and which, by means of mixing, are also evenly distributed among the mixture in the extruder (12).

6. An extrusion conveying device according to any of the foregoing claims, **characterized in that** the marker substance (29) is detectable by an optical sensor of the detection device, and that the sensor (36) is directed at a surface of the mixture which flows by and which carries the marker substance (29) and that in particular the detection device is provided with a sensor which is directed directly at the exposed surface of the material extruded.

7. An extrusion conveying device according to any of the foregoing claims, **characterized in that** the spectral sensitivity of a sensor (36) of the detection device is geared to the emission maximum of the marker substance (29).

8. An extrusion conveying device according to any of the foregoing claims, **characterized in that** the marker substance (29) is formed by magnetic or radioactive particles and/or by fluorescent or luminescent admixtures.

9. An extrusion conveying device according to any of the foregoing claims, **characterized in that** more than one subsidiary conveyor, i.e. altogether 2 or more subsidiary conveyors, are connected to the extruder (12) and that every subsidiary conveyor conveys one component with a marker substance (29, 31) and that the marker substances differ from one another.

10. An extrusion conveying device according to any of the foregoing claims, **characterized in that** the control device (40) controls the speed and/or the input pressure of the extruder (12) in the volumetric conveyor (14) and that it controls a desired mixing ratio of the mixture based on the output signal of the detection device wherein in particular the speed of the subsidiary conveyor(s) is kept constant.

11. An extrusion conveying device according to any of the foregoing claims, **characterized in that** the control device (40) also controls the speed of the extruder (12) and/or of the downstream conveyor (14) and that in particular one of the components, in particular the component which is provided with the marker substance (29), is supplied in a controlled way.

12. An extrusion conveying device according to any of the foregoing claims, **characterized in that** at least one subsidiary conveyor supplies the respective component to the extruder (12) from the side, namely preferably in the upstream half of the extruder, more preferably within the first third and in particular within the first fifth of the length of the extruder.

13. An extrusion conveying device according to any of the foregoing claims, **characterized in that** the extruder (12) is formed as a double-screw extruder, in particular used for the extrusion of rubber mixtures or TPE.

14. An extrusion conveying device according to any of the foregoing claims, **characterized in that** the detection device is provided with a cutting device, such as a blade, which divides the material extruded and that the detection device is provided with a sensor which is directed directly at the freshly cut surface downstream of the cutting device.

15. An extrusion conveying device according to any of the foregoing claims, **characterized in that** the speed of the downstream conveyor (14) and of the subsidiary conveyors (28) can be adjusted responsive to the detected distribution quality of the marker substance wherein the speed ratio between subsidiary conveyor (28) and downstream conveyor (14) is substantially constant.

## Revendications

1. Dispositif de transport à extrusion avec une extrudeuse pour mélanger des composants, en particulier un mélange de caoutchouc ou des élastomères thermoplastiques et avec un convoyeur à fonctionnement volumétrique à la sortie de l'extrudeuse, en particulier une pompe à engrenages, où au moins un composant peut être amené vers l'extrudeuse par un convoyeur volumétrique secondaire, **caractérisé en ce qu'**au moins un composant présente une substance marqueuse (29) et qu'un dispositif de détection pour la substance marqueuse (29) est installée côté sortie de l'extrudeuse (12) et/ou du convoyeur (14) côté sortie, qui est relié à un dispositif de contrôle (40), où la vitesse de rotation de l'extrudeuse (12) et / ou du convoyeur (14) côté sortie, peut être contrôlée par l'intermédiaire du dispositif de contrôle (40) sensible à la quantité de substance marqueuse distribuée détectée.

2. Dispositif de transport à extrusion selon la revendication 1, **caractérisé en ce qu'**au moins un autre composant qui peut être amené vers l'extrudeuse (12), présente la substance marqueuse (29), et que la vitesse de rotation de l'extrudeuse (12) et / ou du convoyeur (14) côté sortie par rapport à la vitesse du convoyeur volumétrique secondaire peut être contrôlée sur la qualité de distribution recueillis de substance du marqueur est contrôlable sensible à la quantité de substance marqueuse distribuée détectée.

3. Dispositif de transport à extrusion selon l'une des revendications précédentes, **caractérisé en ce que** le dispositif de transport, en particulier côté entrée du convoyeur de sortie à fonctionnement volumétrique (14), présente un capteur de pression avec lequel la pression de sortie d'un mélange en aval de l'extrudeuse (12) est mesurable, et que la vitesse de rotation au moins de l'extrudeuse (12) et /ou du convoyeur de sortie est régulée par le signal de sortie du capteur de pression.

4. Dispositif de transport à extrusion selon l'une des revendications précédentes, **caractérisé en ce que** le périphérique de détection est monté sur une fenêtre, qui est prévue du côté de sortie du convoyeur volumétrique de sortie et détecte la proportion et la distribution de la substance marqueuse (29) dans le mélange sur son passage.

5. Dispositif de transport à extrusion selon l'une des revendications précédentes, **caractérisé en ce que** la substance marqueuse (29) est formée de particules qui sont réparties dans le composant substance marqueuse et qui sont également uniformément réparties dans le mélange en les mélangeant dans l'extrudeuse (12).

6. Dispositif de transport à extrusion selon l'une des revendications précédentes, **caractérisé en ce que** la substance marqueuse (29) est détectable par un capteur optique du dispositif de détection et que le capteur (36) est dirigé sur une surface du mélange sur son passage, qui conduit la substance marqueuse (29) et que de préférence le dispositif d'enregistrement présente un capteur qui est directement orienté sur la surface exposée du produit d'extrusion.

7. Dispositif de transport à extrusion selon l'une des revendications précédentes, **caractérisé en ce que** la sensibilité spectrale d'un capteur (36) du dispositif de capture est ajustée sur l'émission maximale de la substance marqueuse (29).

8. Dispositif de transport à extrusion selon l'une des revendications précédentes, **caractérisé en ce que** la substance marqueuse (29) est formée par des particules magnétiques ou radioactives et / ou par des additifs fluorescents ou luminescents.

9. Dispositif de transport à extrusion selon l'une des revendications précédentes, **caractérisé en ce que** plus d'un convoyeur secondaire, donc deux ou plusieurs convoyeurs secondaires sont attachées à l'extrudeuse (12) et chaque convoyeur secondaire transporte un composant avec une substance marqueuse (29, 31), et que les substances marqueuses se distinguent les unes des autres.

10. Dispositif de transport à extrusion selon l'une des revendications précédentes, **caractérisé en ce que** le dispositif de contrôle (40) contrôle la vitesse de rotation et /ou la pression d'entrée de l'extrudeuse (12) dans le convoyeur volumétrique (14) et régule un ratio de mélange désiré basée sur le signal de sortie du dispositif de détection, où en particulier, la vitesse de rotation du convoyeur secondaire ou des convoyeurs secondaires est maintenue constante.

11. Dispositif de transport à extrusion selon l'une des revendications précédentes, **caractérisé en ce que** le dispositif de contrôle (40) régule la vitesse de rotation de l'extrudeuse (12) et / ou du convoyeur côté sortie (14), et en particulier l'un des composants, en particulier l'un des composants présentant la substance marqueuse (29), est amené régulé.

12. Dispositif de transport à extrusion selon l'une des revendications précédentes, **caractérisé en ce qu'**au moins un convoyeur secondaire amène latéralement le composant pertinent vers l'extrudeuse (12) et de préférence dans la moitié de l'extrudeuse en amont, surtout de préférence dans la première troisième partie et, en particulier dans la première cinquième partie de la longueur de l'extrudeuse.

13. Dispositif de transport à extrusion selon l'une des revendications précédentes, **caractérisé en ce que** l'extrudeuse (12) est formée comme l'extrudeuse à deux vis, en particulier à utiliser pour l'extrusion de mélanges de caoutchouc ou TPE.

14. Dispositif de transport à extrusion selon l'une des revendications précédentes, **caractérisé en ce que** le dispositif de détection présente un dispositif de coupe, comme une lame, qui divise le produit d'extrusion, et que le dispositif de détection présente un capteur qui en aval du dispositif de détection est dirigé droit sur la surface fraîchement coupée.

15. Dispositif de transport à extrusion selon l'une des revendications précédentes, **caractérisé en ce que** la vitesse de rotation de la bande transporteuse de sortie côté (14) et de la filiale parraine (28) interjette appel sur le recueillis qualité de distribution de la substance par le marqueur est réglable, avec la vitesse entre filiale convoyeur (28) et promoteur du côté sortie (14) est essentiellement constante.
